# FASCICULE DE BREVET EUROPEEN

(11) **EP 0 677 900 B1**
(45) Date de publication et mention de la délivrance du brevet: **06.08.1997**
(21) Numéro de dépôt: 95400827.2
(22) Date de dépôt: 12.04.1995
(51) Int. Cl.: H01R 25/16, H01R 13/04, B60Q 1/26

(54) **Circuit électrique à bandes découpées, notamment pour un ensemble de feux de signalisation d'un véhicule automobile, comportant des éléments de connexion mâles perfectionnés**
Elektrischer Stromkreis aus abgeschnittenen Streifen, insbesondere für einen Zusammenbau von Warnleuchten eines Kraftfahrzeugs welcher verbesserte männliche Verbindungselemente aufweist
Electrical circuit made up of cut strips, particularly for a set of signal lights of a motor vehicle, comprising improved male connection members

(30) Priorité: 14.04.1994 FR 9404452
(43) Date de publication de la demande: 18.10.1995
(73) Titulaire: VALEO VISION, 93000 Bobigny (FR)
(72) Inventeur: Caron, Philippe, F-27950 Saint-Marcel (FR)
(74) Mandataire: Le Forestier, Eric

(56) Documents cités:
- EP-A- 0 230 833
- WO-A-89/11740
- US-A- 2 866 172
- US-A- 3 284 758
- US-A- 4 983 128

## Description

La présente invention concerne d'une façon générale un feu de signalisation de véhicule automobile, équipé d'un circuit découpé fixé sur son porte-lampes pour la connexion des diverses douilles de lampes à un connecteur d'alimentation électrique desdites lampes.

Classiquement, un tel circuit découpé comprend plusieurs bandes qui, en certains endroits, sont repliées sur elles-mêmes de manière à former des parties mâles de connexion, destinées à coopérer avec un connecteur équipé de contacts femelles.

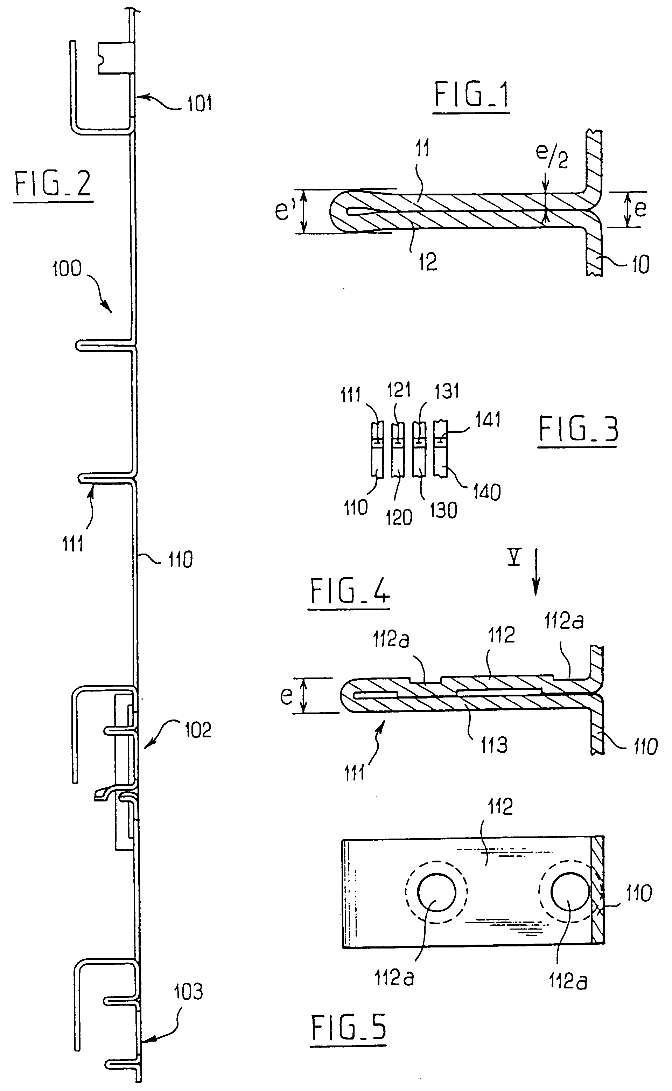

On a représenté sur la figure 1, en coupe transversale, la zone de pliage d'un tel circuit découpé. Il s'agit de deux branches 11, 12 de la bande 10, repliées à environ ou strictement 90° par rapport au plan de la bande et repliées à 180° l'une contre l'autre, pour former une languette de contact mâle.

Pour assurer un bon contact électrique avec le connecteur femelle associé, il est nécessaire que l'épaisseur de la languette mâle soit aussi bien déterminée que possible. Ainsi, pour obtenir une languette d'épaisseur e, on choisit pour la tôle à partir de laquelle le circuit découpé est réalisé une épaisseur égale à e/2.

Mais du fait même du pliage terminal à 180°, il se crée à l'extrémité libre de la languette une surépaisseur, notée e', qui force les côtés du connecteur femelle associé à s'écarter lors du branchement.

Ceci conduit principalement à deux risques. Tout d'abord, il est possible que connecteur femelle ne soit en contact avec la languette qu'en deux points situés de part et d'autre de cette surépaisseur, et ces contacts ponctuels peuvent créer des phénomènes indésirables tels qu'un échauffement ou une corrosion. En outre, l'écartement nécessaire des côtés du connecteur femelle pour franchir la surépaisseur peut amener à dépasser la limite élastique du matériau du connecteur, ce qui a pour effet de diminuer la force de pincement du connecteur femelle sur la languette mâle et d'aboutir à des pertes de contact.

On observera pour terminer que, pour diminuer autant que possible la surépaisseur, on a tendance à presser excessivement les deux branches 11, 12 l'une contre l'autre, ce qui crée un risque d'apparition de criques à l'extrémité libre de la languette, et donc sa fragilisation.

La présente invention vise à pallier ces inconvénients de l'état de la technique et à proposer une languette de contact mâle qui, tout en étant réalisée par pliage de deux branches à 180° l'une contre l'autre, ne présente pas de surépaisseur indésirable en bout.

Ainsi la présente invention concerne tout d'abord un circuit électrique à bandes découpées, notamment pour un ensemble de feux de signalisation de véhicule automobile, du type réalisé par découpage dans une tôle conductrice et comprenant des moyens pour la connexion électrique avec au moins un organe électrique tel qu'une lampe et au moins une languette mâle destinée à coopérer avec un connecteur femelle pour l'alimentation électrique dudit organe, ladite languette réalisée dans la continuité d'une bande conductrice du circuit et étant constituée par deux branches repliées à 180° l'une contre l'autre, caractérisé en ce que l'épaisseur de la tôle au moins dans la région de la languette est inférieure à la moitié de l'épaisseur nominale de la languette et en ce qu'au moins l'une des branches de ladite languette comporte au moins un bossage en saillie vers l'autre branche, définissant une butée lors du pressage des deux branches l'une contre l'autre, de manière à obtenir une languette d'épaisseur essentiellement constante.

Avantageusement, il est prévu un ou plusieurs bossages dans une seule des deux branches de la languette. On prévoit en outre de préférence deux bossages espacés dans au moins l'une des branches de la languette.

Le ou chaque bossage peut présenter une forme circulaire et une largeur inférieure à la largeur de la languette.

L'invention propose également un ensemble de feux de signalisation de véhicule automobile, caractérisé en ce qu'il comprend un porte-lampes, un voyant et un circuit électrique à bandes découpées tel que défini ci-dessus, monté sur le porte lampes, le circuit comportant une pluralité de languettes de contact mâles généralement alignées.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue en coupe d'une languette de contact mâle selon l'art antérieur,
la figure 2 est une vue d'ensemble en coupe longitudinale d'un circuit découpé destiné à être monté sur un porte-lampes d'un bloc de feux de signalisation d'un véhicule automobile,
la figure 3 est une vue en plan partielle du circuit découpé de la figure 2,
la figure 4 est une vue en coupe à échelle agrandie d'une languette de contact mâle selon l'invention, et
la figure 5 est une vue en élévation selon la flèche V de la figure 4.

En référence aux figures 2 et 3, on a représenté un circuit découpé 100 qui comprend une pluralité de bandes conductrices, en l'espèce quatre bandes 110, 120, 130 et 140 qui localement présentent un pliage de manière à définir quatre languettes mâles 111, 121, 131 et 141 (figure 3) destinées à recevoir un connecteur femelle de manière à assurer l'alimentation électrique des diverses lampes.

En l'occurrence, le circuit découpé 100 comporte trois ouvertures 101, 102, 103 pour des lampes, et des pattes de connexion et de verrouillage associées. La construction d'un tel circuit découpé est classique et ne sera pas décrite plus en détail.

En référence maintenant à la figure 4, on a représenté en détail l'une des quatre languettes de contact mâles 111. Celle-ci, comme dans l'art antérieur, est réalisée dans la continuité de la bande 110 par pliage à 180° l'une contre l'autre de deux branches 112, 113, ces deux branches étant reliées au reste de la bande par pliage à 90°.

La languette 111 présente une épaisseur globale e. Selon l'invention, l'épaisseur de la tôle de métal à partir de laquelle le circuit découpé est réalisé est inférieure à e/2, et de préférence légèrement inférieure à cette valeur. En outre, Au moins l'une des deux branches, en l'espèce la branche 112, présente au moins un bossage situé à une certaine distance de l'extrémité libre de la languette et dirigé vers l'autre branche 113, de manière à définir une butée lors du pliage à 180° des deux branches l'une contre l'autre. En l'espèce, il est prévu deux bossages 112a, l'un à une certaine distance du pliage à 180° et l'autre à proximité du pliage à 90° séparant la languette du reste de la bande.

Ainsi, lorsque les deux branches sont repliées l'une contre l'autre, la venue en contact des bossages 112a intérieurement contre la face en vis-à-vis de la branche 113 permet de laisser entre les deux branches, au voisinage du coude à 180°, un espace qui est compatible avec l'aptitude au pliage de la tôle. De la sorte, il n'existe aucune surépaisseur de la languette dans la région de son extrémité libre, et l'on évite de solliciter excessivement la région du pliage à 180° et donc le risque d'apparition de criques ou de fissures est minimisé.

Ainsi la languette présente globalement une épaisseur e uniforme sur toute son étendue, à l'exception toutefois de la région localisée des bossages 112a. Cette uniformité d'épaisseur est favorisée par la présence des deux bossages espacés.

Dans le présent exemple, les bossages 112a sont de forme généralement circulaire, mais d'autres formes peuvent bien entendu être envisagées. On peut également prévoir un seul bossage, ou plus de deux bossages. On évite toutefois de disposer un bossage transversalement à la direction de mise en place du connecteur femelle, de manière à éviter tout risque d'accrochage des côtés du connecteur femelle, en particulier à son extrémité libre, avec le creux défini à l'extérieur de la languette par le bossage.

Concrètement, en vue de réaliser une languette de contact mâle d'une épaisseur e de 1,6 mm, on peut utiliser une tôle d'une épaisseur de 0,75 mm. Dans ce cas, le ou les bossages, au niveau de la face intérieure de la branche 112, sont décalés d'environ 0,1 mm vers l'intérieur.

Ces valeurs ne sont bien entendu nullement limitatives.

De préférence, le ou les bossages 112a sont réalisés avant le pliage, au cours du découpage du circuit, à l'aide d'une empreinte disposée de façon appropriée dans la presse.

Bien entendu, la présente invention n'est nullement limitée à la forme de réalisation décrite et représentée, mais l'homme de l'art saura y apporter toute variante ou modification dans les limites fixées par les revendications.

## Revendications

1. Circuit électrique (100) à bandes découpées, notamment pour un ensemble de feux de signalisation de véhicule automobile, du type réalisé par découpage dans une tôle conductrice et comprenant des moyens pour la connexion électrique avec au moins un organe électrique tel qu'une lampe et au moins une languette mâle (111) destinée à coopérer avec un connecteur femelle pour l'alimentation électrique dudit organe, ladite languette étant réalisée dans la continuité d'une bande conductrice (110) du circuit et étant constituée par deux branches (112, 113) repliées à 180° l'une contre l'autre, caractérisé en ce que l'épaisseur de la tôle au moins dans la région de la languette est inférieure à la moitié de l'épaisseur nominale (e) de la languette et en ce qu'au moins l'une des branches (112) de ladite languette comporte au moins un bossage (112a) en saillie vers l'autre branche, définissant une butée lors du pressage des deux branches l'une contre l'autre, de manière à obtenir une languette d'épaisseur essentiellement constante.

2. Circuit selon la revendication 1, caractérisé en ce qu'il est prévu un ou plusieurs bossages (112a) dans une seule (112) des deux branches de la languette.

3. Circuit selon la revendication 1 ou 2, caractérisé en ce qu'il est prévu deux bossages espacés (112a) dans au moins l'une des branches de la languette.

4. Circuit selon l'une des revendications 1 à 3, caractérisé en ce que le ou chaque bossage (112a) présente une forme circulaire et une largeur inférieure à la largeur de la languette (111).

5. Ensemble de feux de signalisation de véhicule automobile, caractérisé en ce qu'il comprend un porte-lampes, un voyant et un circuit électrique à bandes découpées selon l'une des revendications précédentes monté sur le porte lampes, le circuit comportant une pluralité de languettes de contact mâles (111, 121, 131, 141) généralement alignées.

## Patentansprüche

1. Stromkreis (100) mit gestanzten Streifen, insbesondere für eine Signalleuchteneinheit eines Kraftfahrzeugs, der durch Stanzen aus einem leitenden Blech ausgeführt ist und Mittel für die elektrische Verbindung mit mindestens einem elektrischen Organ, etwa einer Lampe, und mindestens eine Steckkontaktzunge (111) umfaßt, deren Aufgabe darin besteht, mit einer Kontaktbuchse für die Stromversorgung des besagten Organs zusammenzuwirken, wobei die besagte Kontaktzunge aus einem leitenden Streifen (110) des Stromkreises herausgearbeitet ist und aus zwei um 180° zueinander umgebogenen Schenkeln (112, 113) besteht, **dadurch gekennzeichnet,** daß die Dicke des Blechs zumindest im Bereich der Kontaktzunge kleiner als die Hälfte der Nenndicke (e) der Kontaktzunge ist und daß mindestens einer der Schenkel (112) der besagten Kontaktzunge mindestens einen zum anderen Schenkel vorstehenden Vorsprung (112a) aufweist, der einen Anschlag beim Aneinanderpressen der beiden Schenkel bildet, um eine Kontaktzunge mit einer im wesentlichen konstanten Dicke zu erhalten.

2. Stromkreis nach Anspruch 1 , **dadurch gekennzeichnet,** daß ein oder mehrere Vorsprünge (112a) in einem einzigen (112) der beiden Schenkel der Kontaktzunge vorgesehen sind.

3. Stromkreis nach Anspruch 1 oder 2 , **dadurch gekennzeichnet,** daß zwei zueinander beabstandete Vorsprünge (112a) in mindestens einem der Schenkel der Kontaktzunge vorgesehen sind.

4. Stromkreis nach einem der Ansprüche 1 bis 3, **dadurch gekennzeichnet,** daß der bzw. jeder Vorsprung (112a) eine Kreisform und eine Breite aufweist, die kleiner als die Breite der Kontaktzunge (111) ist.

5. Signalleuchteneinheit eines Kraftfahrzeugs , **dadurch gekennzeichnet,** daß sie einen Lampenträger, ein Leuchtenglas und einen auf dem Lampenträger angebrachten Stromkreis mit gestanzten Streifen nach einem der vorangehenden Ansprüche umfaßt, wobei der Stromkreis eine Mehrzahl von allgemein aufeinander ausgerichteten Steckkontaktzungen (111, 121, 131, 141) enthält.

## Claims

1. An electric circuit (100) comprising punched out bands, in particular for a motor vehicle signallamp assembly, of the kind made by cutting a conductive sheet and comprising means for electrical connection with at least one electrical device, such as a lamp, and at least one male tongue (111) designed to co-operate with a female connector to supply electricity to the said device, the said tongue (111) being formed in the continuous extent of a conductive band (110) of the circuit and being constituted by two arms (112, 113) folded at 180° against one another, characterized in that the thickness of the sheet, at least in the region of the tongue, is less than half the nominal thickness (e) of the tongue and in that at least one of the arms (112) of the said tongue comprises at least one boss (112a) projecting towards the other arm and defining a stop when the two arms are pressed against one another so as to provide a tongue with a substantially constant thickness.

2. A circuit according to claim 1, characterized in that it comprises one or more bosses (112a) made in only one (112) of the two arms of the tongue.

3. A circuit according to claim 1 or claim 2, characterized in that it comprises two separated bosses (112a) made in at least one of the arms of the tongue.

4. A circuit according to any one of claims 1 to 3, characterized in that the single boss or each boss (112a) has a circular shape and a width less then the width of the tongue (111).

5. A motor vehicle signal lamp assembly, characterized in that it comprises a lamp holder, an indicator and an electric circuit comprising punched out bands according to any one of the preceding claims fixed to the lamp holder, the circuit comprising a plurality of substantially aligned male contact tongues (111, 121, 131, 141).
